Europäisches Patentamt

European Patent Office

Office européen des brevets

(19)

(11) Publication number: **0 432 103 A2**

# EUROPEAN PATENT APPLICATION

(12)

(21) Application number: **90830460.3**

(22) Date of filing: **16.10.90**

(51) Int. Cl.5: **G05D 23/02, F01P 7/16**

(30) Priority: **20.10.89 IT 5343089 U**

(43) Date of publication of application:
**12.06.91 Bulletin 91/24**

(84) Designated Contracting States:
**AT BE CH DE DK ES FR GB GR IT LI LU NL SE**

(71) Applicant: **BEHR-THOMSON-ITALIA S.p.a.**
**Via E. De Nicola, 1**
**I-10024 Moncalieri (Torino)(IT)**

(72) Inventor: **Triberti, Franco**
**Strada del Pesco 9/B**
**I-10027 Moncalieri (Torino)(IT)**

(74) Representative: **Buzzi, Franco et al**
**c/o Jacobacci-Casetta & Perani S.p.A. Via**
**Alfieri, 17**
**I-10121 Torino(IT)**

(54) **A thermostatic valve for regulating the flow of the cooling liquid in internal combustion engines.**

(57) A thermostatic valve (1) for regulating the flow of the cooling liquid in internal combustion engines comprises a support (3) constituted by a body moulded in one piece with its flange part (9) and with the bearing part (11) for the reaction rod (5) of the heat-sensitive element (2). The body has two opposed, integral axial legs (13) with tooth-like end catches (15) which engage a transverse bridge (20) through which the casing (4) of the heat-sensitive element (2) is slidable.

FIG. 3

EP 0 432 103 A2

# A THERMOSTATIC VALVE FOR REGULATING THE FLOW OF THE COOLING LIQUID IN INTERNAL COMBUSTION ENGINES

The present invention relates in general to thermostatic valves which are connected in circuits for the circulation of heat-exchange fluids, and in particular to thermostatic valves used for regulating the flow of the cooling liquid in internal combustion engines.

More particularly, the invention relates to a thermostatic valve of the type comprising a hollow support with a flange part and a centering element which is fixed coaxially to the flange part and carries a heat-sensitive element including a cylindrical casing which contains an expansible material with a high coefficient of thermal expansion and a reaction rod which projects from one end of the casing and reacts against a bearing part fixed to the flange part of the support, the casing being movable axially relative to the rod through the centering element from a contracted rest position, as a result of the thermal expansion of the expansible material, and carrying a coaxial valve obturator plate adapted to cooperate with an annular valve seat formed in the flange part of the support, and resilient means which tend to keep the casing in the contracted position which corresponds to the closure of the valve.

In thermostatic valves of this type, the support is usually constituted by a metal element and most of its components, particularly the centering element, are constituted by parts which are made separately and then fixed to the flange part of the support. This structure is therefore quite complex and expensive to manufacture and assemble.

The object of the present invention is to avoid the aforesaid disadvantage and to provide a thermostatic valve of the type defined above which is simpler and cheaper to produce.

According to the invention, this object is achieved by virtue of the fact that the valve support is constituted by a plastics body moulded in one piece with the bearing part and the flange part, and in that the centering element of the support comprises two opposite axial legs also formed in one piece with the body and having respective tooth-shaped end catches which engage a transverse bridge through which the casing of the heat-sensitive element is slidable.

Conveniently, the tooth-shaped catches and the corresponding engagement ends of the transverse bridge of the centering element are shaped so as to prevent the axial legs of the support body from moving apart radially.

According to another characteristic of the invention, the flange part of the support may be moulded in one piece with the body of an air valve.

The invention will now be described in detail with reference to the appended drawings, provided purely by way of non-limiting example, in which:

Figure 1 is a schematic perspective view of a thermostatic valve according to the invention,

Figure 2 is a view similar to Figure 1, showing a variant of the valve,

Figure 3 is an axial section taken on the line III-III of Figure 1,

Figure 4 is a cross-section taken on the line IV-IV of Figure 3,

Figure 5 is an axial section taken on the line V-V of Figure 2,

Figure 6 is a perspective view of the support of the valve shown in Figures 2 and 5,

Figure 7 is an axial section taken on the line VII-VII of Figure 6,

Figure 8 is a plan view taken on the arrow VIII of Figure 7, and

Figure 9 is a section taken on the line XI-XI of Figure 8, on an enlarged scale.

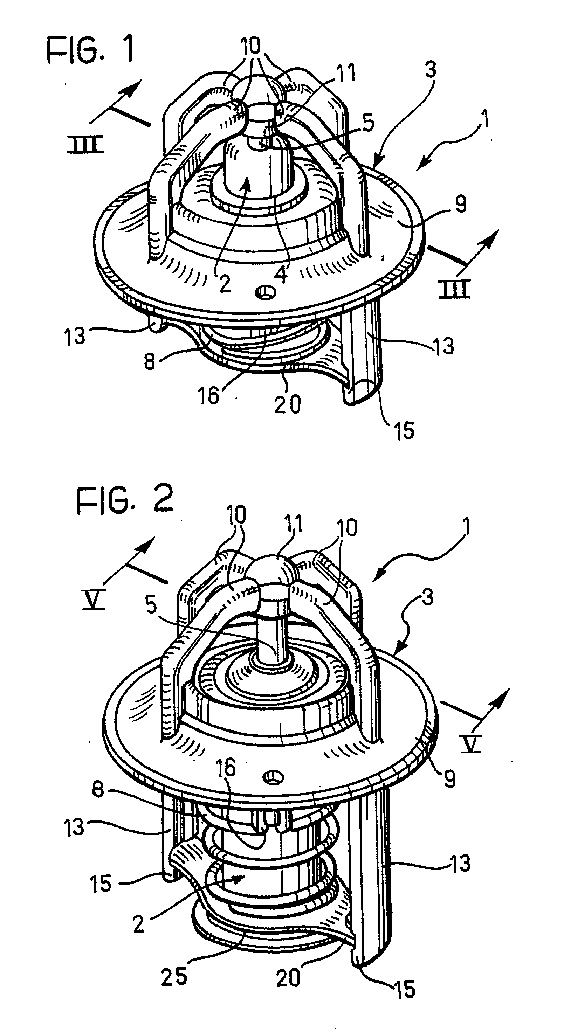

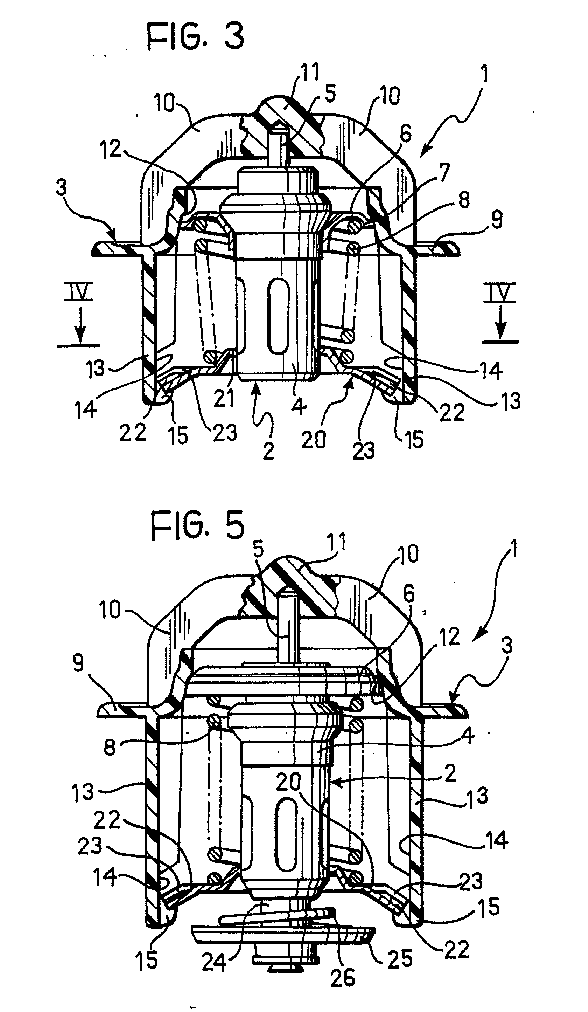

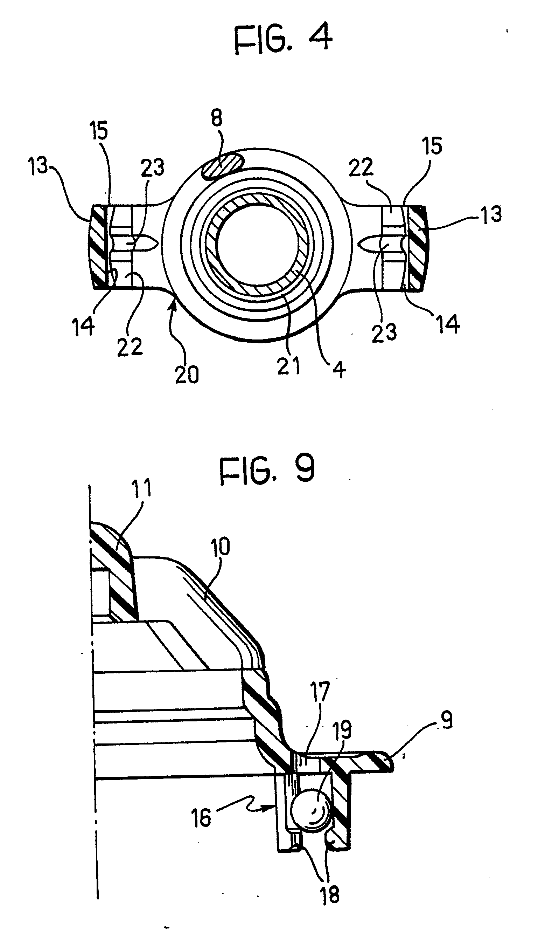

With reference initially to Figures 1, 3 and 4, a thermostatic valve, generally indicated 1, is used for regulating the flow of the cooling liquid in an internal combustion engine for motor vehicles.

The valve 1 comprises essentially a heat-sensitive element 2 and a hollow support 3 by means of which the heat sensitive element 2 is fitted, in known manner, in the cooling circuit of the engine.

The heat-sensitive element 2 is formed by a cylindrical casing 4 containing a heat-sensitive material with a high coefficient of thermal expansion, for example, a waxy material which expands rapidly within a predetermined temperature range. A reaction rod 5 is slidable axially in the casing 4 and projects from one end thereof. An annular plate 6 with a bent peripheral sealing edge 7 is fixed to the outside of the casing 4 and constitutes a valve obturator. The obturator 6 is subjected to the action of a helical compression spring 8, in the manner explained below.

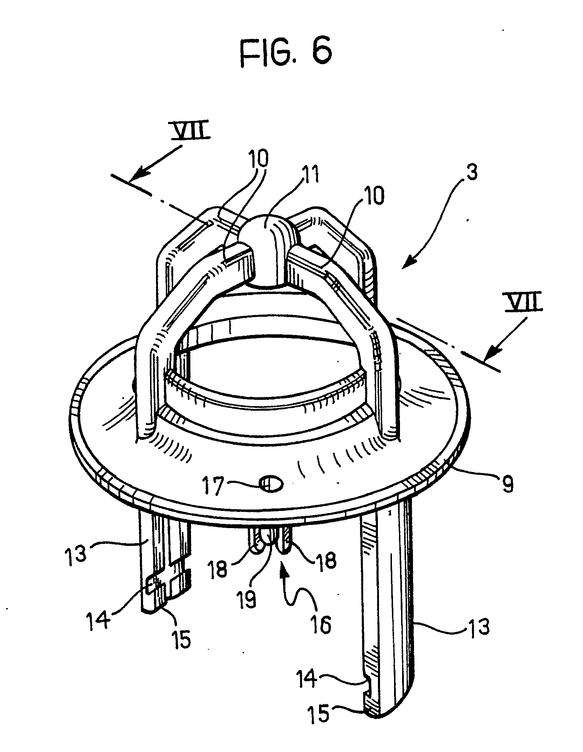

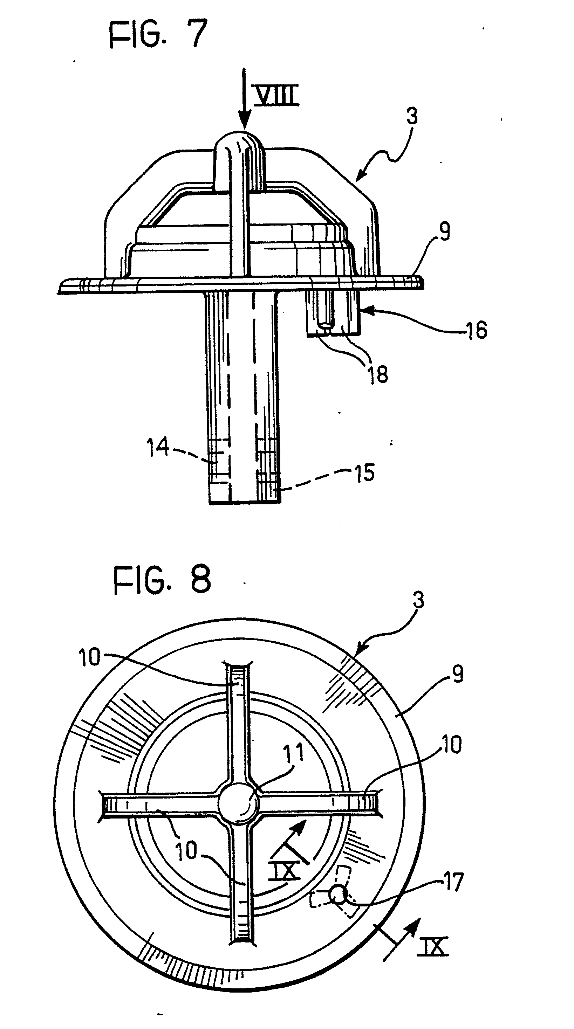

The support 3, which is shown in greater detail in Figures 6 to 8, is constituted by a plastics body moulded in one piece with an annular flange 9 surmounted by four equiangularly-spaced arcuate elements 10 which terminate in a central hollow bearing part 11.

The flange part 9 is formed with an internal annular valve seat 12 and two diametrally opposite legs 13, also moulded integrally, project from its face opposite the bearing part 11. The free ends of the legs 11 are formed with two internal notches 14 defined, at the ends of the legs 13, by respective tooth-shaped catches 15 which converge inwardly of the support 1.

Moreover, if the use of the thermostatic valve 1 dictates it, the flange part 9 may be provided with an air valve 16 constituted by a through-hole 17 and three integral appendages 18 which project axially from the same side as the legs 13 and between which a ball obturator 19 is movable, as shown in detail in Figure 9.

As can be seen clearly in Figures 1, 3 and 4, the heat-sensitive element 2 is inserted coaxially in the support 3 with the free end of the reaction rod 5 engaged in the hollow bearing part 11 and the cylindrical casing 4 guided for axial sliding through a transverse bridge with a central centering and guide hole 21. The ends 22 of the transverse bridge 20 are of a shape complementary with that of the teeth 15 of the legs 13 of the support 3 and have respective depressions 23 as stiffeners and for preventing rotation. The ends 22 are inserted in the notches 14 and bear against the teeth 15. The transverse bridge 20 is kept in this bearing position by the compression spring 8 whose end remote from the obturator plate 6 bears against the bridge 20 near the central aperture 21. In the condition shown in the drawings, the spring 8 tends to urge the sealing edge 7 of the annular plate 6 against the annular valve seat 12 so that, in use, it closes the passage for the liquid through the valve 1. When the temperature of the cooling liquid reaches a predetermined threshold value, the heat-sensitive material in the casing 4 expands rapidly, exerting an axial force on the reaction rod 5. Since, as stated, the free end of the rod 5 is inserted in the bearing part 11, the casing 4 is translated axially, moving through the guide hole 21 in the transverse bridge 20 and compressing the spring 8. The plate 6 thus moves away from the valve seat 12, gradually opening the passage for the cooling liquid through the valve 1.

The embodiment shown in Figures 2 and 5 is generally similar to that described above and only the differences will be described in detail, with the use of the same reference numerals for identical or similar parts.

In this variant, the legs 13 of the support 3 are longer than in the previous embodiment and, at its end opposite the reaction rod 5, the casing 4 of the heat-sensitive element 2 has a shank 24 carrying a second plate obturator 25 for a by-pass valve, opposed by a helical compression spring 26.

## Claims

1. A thermostatic valve for regulating the flow of the cooling liquid in internal combustion engines, comprising a hollow support with a flange part and a centering element which is fixed coaxially to the flange part and carries a heat-sensitive element including a cylindrical casing which contains an expansible material with a high coefficient of thermal expansion and a reaction rod which projects from one end of the casing and reacts against a bearing part fixed to the flange part of the support, the casing being movable axially relative to the rod through the centering element from a contracted rest position, as a result of the thermal expansion of the expansible material, and carrying a coaxial valve obturator plate adapted to cooperate with an annular valve seat formed in the flange part of the support, and resilient means which tend to keep the casing in the contracted position which corresponds to the closure of the valve, characterised in that the support is constituted by a plastics body (3) moulded in one piece with the bearing part (11) and the flange part (9), and in that the centering element of the support comprises two opposite axial legs (13) also formed in one piece with the body (3) and having respective tooth-shaped end catches which engage a transverse bridge (20) through which the casing (4) of the heat-sensitive element (2) is slidable.

2. A thermostatic valve according to Claim 1, characterised in that the tooth-shaped catches (15) and the corresponding engagement ends (22) of the transverse bridge (20) are shaped so as to prevent the axial legs (13) of the support body (3) from moving apart radially and to prevent the bridge (20) from rotating.

3. A thermostatic valve according to Claim 1 or Claim 2, in which the flange part of the support carries an air valve including a tubular cylindrical member forming a valve seat and containing a ball obturator which cooperates with the valve seat, characterised in that the tubular cylindrical member is defined by axial appendages (18) formed in one piece with the support body (3).

FIG. 1

FIG. 2

# FIG. 3

# FIG. 5

# FIG. 4

# FIG. 9

# FIG. 6

## FIG. 7

## FIG. 8